(19) Europäisches Patentamt

European Patent Office

Office européen des brevets

(11) **EP 1 337 472 B1**

(12) **EUROPEAN PATENT SPECIFICATION**

(45) Date of publication and mention
of the grant of the patent:
**15.06.2005 Bulletin 2005/24**

(51) Int Cl.⁷: **C02F 1/461**, C02F 1/42

(21) Application number: **01910280.5**

(86) International application number:
**PCT/SE2001/000413**

(22) Date of filing: **26.02.2001**

(87) International publication number:
**WO 2002/040406 (23.05.2002 Gazette 2002/21)**

(54) **PROCESS AND APPARATUS FOR REMOVAL AND DESTRUCTION OF DISSOLVED NITRATE.**

VERFAHREN UND VORRICHTUNG ZUR ABTRENNUNG UND ZERSTÖRUNG VON GELÖSTEM NITRAT

PROCEDE ET APPAREIL POUR L'EXTRACTION ET LA DESTRUCTION DE NITRATE DISSOUS

(84) Designated Contracting States:
**AT BE CH CY DE DK ES FI FR GB GR IE IT LI LU MC NL PT SE TR**

(30) Priority: **14.11.2000 SE 0004202**

(43) Date of publication of application:
**27.08.2003 Bulletin 2003/35**

(73) Proprietor: **VATTENFALL AB**
**S-162 87 Stockholm (SE)**

(72) Inventors:
• **VELIN, Anna**
  **S-196 31 Kungsängen (SE)**
• **RESBEUT, Steve**
  **F-69005 Lyon (FR)**

(74) Representative: **Mattsson, Niklas**
**Awapatent AB**
**P.O. Box 45086**
**104 30 Stockholm (SE)**

(56) References cited:
**EP-A2- 0 291 330**          **WO-A1-00/56666**
**GB-A- 2 267 290**          **US-A- 5 306 400**

**Description**

Technical field

The present invention is within the field of nitrate removal and destruction, especially from ground water and effluents of different kinds. More specifically, it relates to a combination of a nitrate removal step and a nitrate destruction step, last mentioned step being performed as an electrolysis operation in a specific type of cell and with specific electrolyte regenerations.

Background of the invention

The pollution of ground water with nitrates as well as effluents containing nitrates is a great problem all over the world. In this context, a first goal is to obtain drinking water from such waters or effluents, where the current nitrate concentrations limit for potable water set by the European Environmental Agency is 50 ppm, and a second goal is to destruct nitrates into harmless species. As an example of a process for said first goal the use of ion exchange resins can be referred to, and in the latter case the biological way is the most important and a regeneration of nitrate into nitric acid is rather common.

A method for the combined removal and destruction of nitrate ions is also previously known from US 5 306 400. However, said method is performed fundamentally different from the present invention in that an anion exchange resin has been incorporated into a central compartment of the electrochemical cell. As specifically stated in col. 1, lines 57-59, of said patent specification the method disclosed combines the benefits of ion exchange and electrodialysis.

The present invention represents a very simple and efficient alternative technology for accomplishing removal as well as destruction of nitrates into harmless products.

Description of the invention

According to a first aspect of the present invention there is provided a new process for the removal and destruction of dissolved nitrate from ground water or aqueous effluents containing the same. Said process is especially advantageous in connection with the removal and destruction of waters or aqueous effluents containing nitrates in low concentrations, such as at most 500 mg/L.

The process is based on a combination of a removal step, where nitrate is eliminated from said water or effluent in the form of a more concentrated solution thereof, and a destruction step, where said more concentrated nitrate solution is subjected to an electrolysis operation for nitrate destruction by electrochemical reduction thereof. An essential feature of said electrolysis operation is also that it is performed in a divided cell with anolyte and catholyte compartments and in several cycles and that electrolyte from the first cycle is utilized in a specific way in the next electrolysis cycle. Specific regenerations of electrolytes are also advantageous and preferable embodiments of the invention.

More specifically, the process according to the invention comprises a removal step where nitrate is eliminated from said water or effluent in the form of a more concentrated solution thereof, and a destruction step where said more concentrated nitrate solution is subjected to an electrolysis operation for nitrate destruction by electrochemical reduction thereof, the electrolysis operation being performed in several cycles in a divided cell with anolyte and catholyte compartments, where said concentrated nitrate solution is initially used as a catholyte and spent catholyte is then used as an anolyte at a later stage of the electrolysis operation.

The first step of the process, i.e. the nitrate removal step, can be performed in a manner known per se. Examples of preferable technologies in this respect are ion exchange, electrodialysis or reverse osmosis operations. An especially preferable operation is the use of an ion exchange process, e.g. by means of an ion exchange resin. Details about such operations can be found in the prior art.

The electrolysis operation is performed in a multiple compartment, preferably a two compartment, electrochemical cell with discrete anolyte and catholyte compartments, respectively. Generally, said divided cells are accomplished by means of cation exchange membranes. Examples of membranes to be used are the commercially available membranes Nafion 350, 127, 324, 450, CMV, CMX and ARA.

The electrodes of said cells can easily be selected by a person skilled in the art. Examples of electrode materials for anodes as well as cathodes are nickel, platinum and platinised titanium. Copper, lead and graphite could also be mentioned as cathode materials. Further details about electrode materials will also be given below.

The reversal of anode and cathode reactions, respectively, for the cycle following the first cycle can be accomplished either by reversing the polarities of the electrodes after said first cycle or by redirecting the anolyte and catholyte to the catholyte compartment and the anolyte compartment, respectively, in said cycle following the first one.

In addition to those cases of the present invention, where catholyte from the first cycle is reused as anolyte in the next cycle, said spent catholyte from the first cycle could also advantageously be recycled to the first removal step where nitrate is eliminated from the water or effluent. Advantages in connection with such an embodiment of the invention are for instance:

supply of a solution for the next cycle without an extra energy spending;
nitrate reduction products and unconverted nitrates are not discharged;
the anolyte is not contaminated and can be reused as flushing solution for the first removal step.

According to another preferable embodiment of the process anolyte from the first cycle is recycled to the first removal step for use in a regeneration of the removal step means. According to another preferable embodiment anolyte is recycled for new use as anolyte in a later cycle. Advantages in connection with such embodiments are:

easy to control;
anolyte can be regenerated when the electrical conductivity is too low;
reduced risk for contaminations of removal step means;
better process economy concerning nitrate reduction per se.

More specifically, one embodiment of the invention is represented by a process wherein said concentrated nitrate solution is used as a catholyte for a first cycle, spent catholyte from said first cycle is used as an anolyte for the next cycle and spent anolyte from said first cycle is used as a catholyte in said next cycle.

Another embodiment of the invention is a process wherein said removal step comprises an ion-exchange operation and where after a first nitrate reduction cycle a major part of the spent catholyte is used as the anolyte in the next cycle, a minor part of the spent catholyte is recycled to the ion-exchange operation so as to remove nitrate from a prior removal step therefrom and spent anolyte is passed to the ion-exchange operation for use as a flushing solution for the ion-exchange nitrate removal step and then as the catholyte in the next cycle.

According to another embodiment of the process the change from catholyte in one cycle to anolyte in the next cycle and the change from anolyte in one cycle to catholyte in the next cycle, respectively, is accomplished by recycling thereof into the opposite compartment in said next cycles.

Still another embodiment is represented by a process wherein the change from catholyte in one cycle to anolyte in the next cycle and the change from anolyte in one cycle to catholyte in the next cycle, respectively, is accomplished by a reversal of the polarities of said compartments, respectively.

In addition to the above-mentioned embodiments of the invention a preferable embodiment of the process is a process wherein said removal step comprises an ion-exchange operation and where a reversal of the polarities of said anolyte and catholyte compartments is performed during the nitrate reduction cycle.

Some interesting alternatives of the process according to the present invention can be summarized as follows.

One alternative is represented by the case where the nitrate removal step is performed as an electrolysis operation and where the major part of the spent catholyte after a first reduction cycle is used as the anolyte in the next cycle, while a minor part of said spent catholyte is used to remove nitrate from the previously used ion exchanger. In this context it should be noted that the terms "major" and "minor" are used in their commonly known senses, i.e. generally above 50% and below 50%, respectively. Often, however, "major" is represented by above 60%, above 70%, above 80% or even more.

According to this alternative the anolyte is neutralized during the electrolysis operation. The spent anolyte serves as a flushing solution for the nitrate removal from the ion exchanger, which in turn means that it becomes the catholyte in the next eletrolysis operation or stage.

A second alternative, when an ion exchange operation is referred to, is represented by the case where after the first electrolysis operation or cycle the polarities of the electrodes are switched or the two eletrolytes are redirected. This means that spent catholyte will then become the anolyte in the next stage. The spent anolyte, which is free from impurities, will in turn be used as a catholyte in the next stage. In connection with this alternative it should also be mentioned that a redirection of the flow should be necessary only when utilizing cathodes which are dissolved when they are operated as anodes.

The volumetric changes during the recycling process can be overcome by a flushing of the ion exchanger with water to regain the original volumes of the electrolyte containers or tanks.

A third alternative when an ion exchange operation is included is a process where the polarity of the electrodes is reversed before the first electrolysis cycle has been completed, i.e. during the nitrate reduction operation. By this alternative one makes sure that the anolyte remains impurity free throughout the whole process. Unlimited numbers of cycles can be performed without any contaminations of the ion exchanger.

Furthermore, such a regeneration procedure is very advantageous from an economical point of view, and moreover, the cell voltage remains stable during the whole regeneration procedure.

A fourth alternative is represented by the case where the nitrate removal step is performed as an electrodialysis or reverse osmosis operation and where the effluent from said operation is passed into the catholyte compartment of the cell for electroreduction. After the electroreduction step the polarities of the electrodes are reversed. In this way the anolyte can be regenerated. In addition thereto, the impurities which are accumulated in the catholyte could be oxidized. The spent catholyte will then be discharged. As an anolyte from the beginning of the process a pure alkali metal (preferably sodium) hydroxide solution can be utilized. By the way, such alkali metal hydroxide can be used as an anolyte also in other alternatives or embodiments of the invention.

A fifth alternative is also represented by the case where the nitrate removal step is performed as an electrodialysis or reverse osmosis operation but where the anolyte and catholyte are redirected into opposite compartments after the nitrate reduction has been completed. The spent anolyte will thus become the catholyte and the spent catholyte will become the anolyte. The first cycle will then be finalized when the regeneration of the two electrolytes have been finished.

As to electrode materials for use in the process the following could be added. In cases where changes of flows or polarity reversals are utilized after the first nitrate destruction cycle has been completed especially preferable cathode materials are Pt, Ni, Cu, Pb, graphite, Hg, stainless steel, Hastelloy or Ti while preferable anode materials are Ni, Pt/Ti, Nb, Ti or Pt.

In cases where polarity reversals are made during the nitrate reduction operation especially preferable electrode materials are Pt, graphite, Ni, Hastelloy, stainless steel or Ti as cathode materials and Pt, Ni, graphite, stainless steel or Ti as anode materials.

According to another aspect of the present invention an apparatus which is useful in the above-mentioned process is also provided. In other words, an apparatus for the removal and destruction of dissolved nitrate from ground water or aqueous effluents containing the same, according to all aspects as described in connection with the process, is referred to.

The apparatus according to the invention comprises a separate nitrate removal unit and a separate nitrate destruction unit in the form of an electrochemical cell divided into anolyte and catholyte compartments by means of a cation exchange membrane, which units are arranged such that nitrate enriched solution from said removal unit will initially enter the catholyte compartment of said cell, the apparatus being provided with means enabling the use of spent catholyte as anolyte later on in the destruction operation.

According to a preferable embodiment of said apparatus the nitrate removal unit is selected from ion-exchange, electrodialysis and reverse osmosis units.

As to the ion-exchange unit it preferably comprises at least two ion-exchange columns or groups of ion exchange columns enabling the use of one column or group of columns for the removal of nitrate while the other one or the other group is regenerated, preferably by electrolyte from the electrochemical cell.

Further details concerning the apparatus can be taken from the description of the process, according to the general description thereof as well as according to the specific examples thereof.

Figure

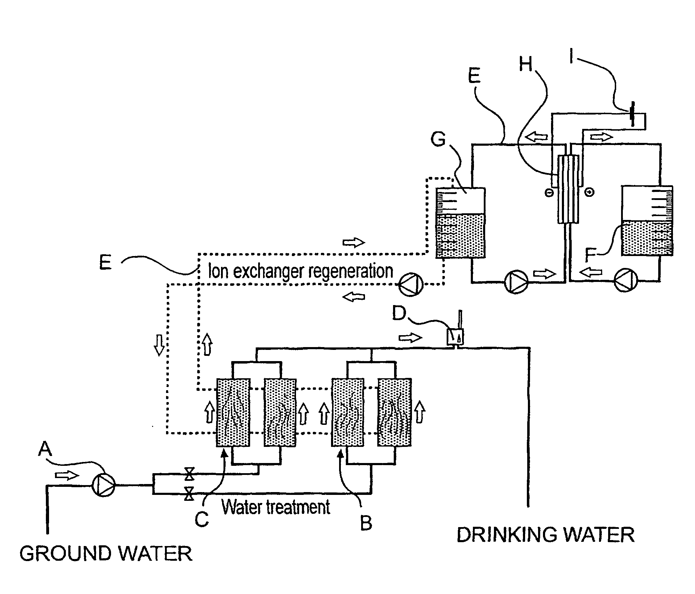

The Figure schematically shows one embodiment of an apparatus for performing the process according to the invention, viz. where ion exchange columns are used for the removal step.

The apparatus shown in the Figure includes the following elements: a hydraulic pump A, ion exchange cartridges B (group 1), ion exchange cartridges C (group 2), a captor D, a hydraulic circuit E and an electrochemical cell H with an anolyte compartment F, a catholyte compartment G and an electrical current supply I, respectively.

Said apparatus works in the following way. Ground water is pumped by means of the hydraulic pump A and passes through the first group of anion exchangers B, nitrate ions present in said water being captured by said ion exchangers and replaced by hydroxide ions. The feed from the ion exchangers is controlled by the captor D (a specific electrode or an UV spectrophotometer cell) as concerns the nitrate level. When the first group of ion exchangers B is exhaused, the ground water is directed to the second group of ion exchangers C.

The first ion exchange group B is regenerated with a sodium hydroxide solution from the anolyte compartment F or the catholyte compartment G by means of the hydraulic circuit E. Nitrate is removed and replaced by hydroxide ions. Then said ion exchange group is flushed with ground water from A, and the resulting solution is passed into the catholyte compartment G.

The hydraulic circuit cell E is on, and both solutions, viz. catholyte and anolyte, feed the cell E, which is divided by means of a cation exchange membrane. The current suply I gives a continuous potential difference across the electrodes.

Nitrates are reduced at the cathode, and water is reduced to give hydrogen gas and hydroxide ions, which are combined with sodium ions coming from the anolyte through the cation exchange membrane. On the anolyte side water is oxidised to give oxygen and protons, which neutralise the sodium hydroxide. After a complete nitrate reduction,

**EP 1 337 472 B1**

and optionally a regeneration of the electrolyte support in a batchwise mode, a high concentration sodium hydroxide solution is ready for the regeneration of the second group of anion exchangers.

Examples

Two different experiments were performed in an apparatus of the type shown in the Figure. The process parameters used were the following:

| Active surface electrode | 400 cm$^2$ |
| Current density | 1 kA/m$^2$ |
| Electrode gap | 8 mm |
| Electrolyte flow | 9L/min |
| Linear speed flow | 0,5 m/s |
| Membrane | Nafion®350 |

The electrolytes of the anodic and cathodic compartments had a volume of 10L each. The anolyte was 1,5M sodium hydroxide.

The pressure on the cell was maintained at 0,2 bar, which provides a constant flow of 9L/min in each compartment. The temperature of the electrolytes increased after a charge of 1F/mol had passed through the cell and was stabilised at 45-55°C.

The 2M sodium hydroxide solution, which was used to remove nitrate from the ion exchange resin, will be diluted after the rinsing of said resin. A composition of the electrolyte which will serve as a catholyte is [NaOH] = 0,2M and [NaNO$_3$] = 0,1M.

EXAMPLE 1

The nitrate containing sodium hydroxide solution was introduced into the cathodic compartment where nitrate reduction and water electrolysis were the two main reactions. Two consecutive reactions for nitrate reduction took place with the reutilisation of the original catholyte for nitrate removal by means of the ion-exchanger. 76 % of the nitrate was reduced in the first and total nitrate reduction was achieved in the second cycle.

In the final solution the sodium hydroxide concentration had increased from 0.28 to 2 M in the first and 0.36 to 2.036 in the second cycle. That was due to the sodium transfer from the anolyte through the cation exchange membrane. In the anodic compartment the hydroxide ion solution was neutralised, and the sodium concentration decreased from 1.96 to 0.27 M in the first and 2.03 to 0.28 M in the second cycle. Volumetric changes in the two compartments resulted in a significant increase of the volume of the catholyte and a decrease of the anolyte volume.

Part of the catholyte was used for further nitrate removal nitrate by the ion exchanger and the other part served as anolyte in the second cycle. Consequently the configuration of the second cycle was:

• For the anodic compartment, a large part of the final cathodic solution of the first run only;
• For the cathodic compartment, a small part of the cathodic solution with new amount of nitrates, and rinsing solution.

Example parameters and results are depicted below:

| FIRST CYCLE | | | | | | | | | |
|---|---|---|---|---|---|---|---|---|---|
| TIME (hours) | Current Intensity (Amp) | Tension (volts) | CATHOLYTE | | | | | ANOLYTE | |
| | | | Vol approx. (Litres) | [OH$^-$] (mol/L) | [NO$_3^-$] (mol/L) | [NO$_2^-$] (mol/L) | [NH$_4^+$] (mol/L) | Vol approx. (Litres) | [OH$^-$] (mol/L) |
| 0 | 40 | 3.18 | 9.70 | 0.28 | 1.79E-01 | 0.00E+00 | 0.00E+00 | 9.80 | 1.96 |

(continued)

| FIRST CYCLE | | | | | | | | | |
|---|---|---|---|---|---|---|---|---|---|
| TIME (hours) | Current Intensity (Amp) | Tension (volts) | CATHOLYTE | | | | | ANOLYTE | |
| | | | Vol approx. (Litres) | $[OH^-]$ (mol/L) | $[NO_3^-]$ (mol/L) | $[NO_2^-]$ (mol/L) | $[NH_4^+]$ (mol/L) | Vol approx. (Litres) | $[OH^-]$ (mol/L) |
| 1.5 | 40 | 2.9 | 9.90 | 0.54 | 1.56E-01 | 2.74E-03 | 1.06E-02 | 9.50 | 1.76 |
| 3 | 40 | 2.85 | 10.10 | 0.80 | 1.29E-01 | 3.35E-03 | 1.90E-02 | 9.25 | 1.59 |
| 6 | 40 | 2.9 | 10.40 | 1.23 | 9.78E-02 | 3.29E-03 | 3.30E-02 | 8.70 | 1.18 |
| 8.17 | 40 | 2.99 | 10.60 | 1.52 | 8.60E-02 | 3.28E-03 | 4.48E-02 | 8.30 | 0.87 |
| 9.5 | 40 | 3.09 | 10.70 | 1.69 | 7.24E-02 | 2.46E-03 | 3.63E-02 | 8.10 | 0.67 |
| 12 | 40 | 3.88 | 10.80 | 2.00 | 4.32E-02 | 0.00E+00 | 3.27E-02 | 7.60 | 0.27 |

For the second cycle - the catholyte was prepared as it leaves the ion-exchanger including rinsing steps. A part of the catholyte had been used for nitrate removal. The nitrate concentration was lower than in the first cycle.
The anolyte was part of the catholyte, 10 litres of used catholyte.

EP 1 337 472 B1

SECOND CYCLE

| TIME (hours) | Current Intensity (Amp) | Tension (volts) | CATHOLYTE | | | | | ANOLYTE | | | | |
|---|---|---|---|---|---|---|---|---|---|---|---|---|
| | | | Vol approx. (Litres) | [OH⁻] (mol/L) | [NO₃⁻] (mol/L) | [NO₂⁻] (mol/L) | [NH₄⁺] (mol/L) | Vol approx. (Litres) | [OH⁻] (mol/L) | [NO₃⁻] (mol/L) | [NO₂⁻] (mol/L) | [NH₄⁺] (mol/L) |
| 0 | 40 | 3.48 | 10 | 0.3665 | 9.8E-02 | 0 | 4.1E-03 | 10 | 2.03 | 3.3E-02 | 0 | 2.4E-02 |
| 2 | 40 | 3.11 | 10.1 | 0.7 | 8.1E-02 | 6.1E-03 | 1.9E-02 | 9.7 | 1.76 | 3.3E-02 | 0 | 2.2E-02 |
| 3.5 | 40 | 3.03 | 10.2 | 0.9303 | 6.7E-02 | 6.4E-03 | 3.1E-02 | 9.5 | 1.55 | 3.5E-02 | 0 | 1.5E-02 |
| 7 | 40 | 3.01 | 10.5 | 1.4134 | 3.4E-02 | 9.4E-03 | 3.8E-02 | 8.8 | 1.14 | 3.3E-02 | 0 | 6.4E-03 |
| 9 | 40 | 3 | 10.7 | 1.6436 | 1.3E-02 | 9.2E-03 | 3.5E-02 | 8.5 | 0.85 | 3.9E-02 | 0 | 2.1E-03 |
| 11 | 40 | 3.4 | 10.8 | 1.8275 | 5.3E-03 | 5.8E-03 | 3.2E-02 | 8.1 | 0.58 | 4.7E-02 | 2.2E-03 | 1.4E-03 |
| 13 | 40 | 3.8 | 10.9 | 2.068 | 0 | 5.3E-03 | 2.4E-02 | 7.8 | 0.28 | 4.3E-02 | 2.2E-03 | 0 |

$[NH_4^+]$ column where indicated uses $(mol/L)$ units.

The reactions involved are the following.
Nitrate reduction at the cathode:

$$NO_3^- + H_2O + 2e^- \rightarrow NO_2^- + 2OH^- \tag{1}$$

$$NO_2^- + 2H_2O + 3e^- \rightarrow \tfrac{1}{2}N_2 + 4OH^- \tag{2}$$

or

$$NO_3^- + 3H_2O + 5e^- \rightarrow \tfrac{1}{2}N_2 + 6OH^- \tag{3}$$

$$NO_2^- + 6H_2O + 6e^- \rightarrow NH_4^+ + 8OH^- \tag{4}$$

or

$$NO_3^- + 7H_2O + 8e^- \rightarrow NH_4^+ + 10OH^- \tag{5}$$

Water electrolysis with hydrogen evolution at the cathode and oxygen evolution at the anode:

Cathodic reaction:

$$H_2O + 2e^- \rightarrow 2OH^- + H_2 \tag{6}$$

Anodic reaction:

$$H_2O \rightarrow 2H^+ + 2e^- + \tfrac{1}{2}O_2 \tag{7}$$

The transfer through the cation exchange membrane concerns only the proton and $Na^+$ for the first cycle and some $NH_4^+$ in the second cycle.
The cumulative faradic yield for nitrate reduction was 55% in the first and 40% in the second cycle. This value is calculated with the following formula:

$$Rd\%(t) = \frac{(C_{t=0} \times V_{t=0} - C_t \times V_t) \times \Delta n \times 96500}{t \times i} \tag{8}$$

$C_{t=0}$ and $C_t$ are the nitrate concentrations at time t=0 and t
$V_{t=0}$ and $V_t$ are the solutions volume at time t=0 and t
$\Delta n$ number of transferred electrons ($\Delta n$=8)
$i$ the intensity applied (i = 40 Amp)
The nitrate concentration and the product concentration of the reduction are displayed in the following figures:

[NO$_3^-$], [NO$_2^-$] and [NH$_4^+$] conc. variation vs. Time. First cycle

[NO$_3^-$], [NO$_2^-$] and [NH$_4^+$] conc. variation vs. Time. Second cycle

The ammonium ion concentration in the second cycle decreases as the reaction advances because of its oxidation on the anode following reactions (4) and (5).

EXAMPLE 2

As was demonstrated in the previous example, the concentration of sodium hydroxide - which is used for regeneration of the ion exchanger and as supporting electrolyte for the nitrate reduction step - increases in the catholyte and decreases in the anolyte. In Example 1 the possibility to re-use the high concentration in the catholyte for the next cycle was demonstrated.

In this example, the possibility to add a regeneration step in order to neutralise the catholyte and regenerate the anolyte for use it for the next cycle is shown. This regeneration can be performed after or during the reduction cycle. Example 2 exemplifies a simultaneous regeneration of the electrolyte and a nitrate reduction.

During the nitrate reduction process, the current intensity was inverted when the anolyte concentration reached 0,3 M. The nitrate reduction was carried out at 40 A (1 kA/m2). In the regeneration step the current density was 2 kA/m2. The results are summarized in the following table.

| TIME (hours) | Current Intensity (Amp) | Tension (volts) | CATHOLYTE | | | | | ANOLYTE | | |
|---|---|---|---|---|---|---|---|---|---|---|
| | | | Vol approx. (Litres) | [OH$^-$] (mol/L) | [NO$_3^-$] (mol/L) | [NO$_2^-$] (mol/L) | [NH$_4^+$] (mol/L) | Vol approx. (Litres) | [OH$^-$] (mol/L) | [NH$_4^+$] (mol/L) |
| 0 | 40 | 3.45 | 10 | 0.33 | 9.72E-02 | 0.00E+00 | 0.00E+00 | 10 | 1.01 | 0.00E+00 |
| 3.2 | 40 | 3.28 | 10.1 | 0.83 | 6.79E-02 | 0.00E+00 | 6.91E-03 | 9.2 | 0.55 | 0.00E+00 |
| 5.0 | -80 | 4.30 | 10.2 | 1.11 | 5.71E-02 | 0.00E+00 | 8.27E-03 | 8.7 | 0.26 | 0.00E+00 |
| 6.4 | -80 | 4.40 | 10 | 0.75 | 5.81E-02 | 0.00E+00 | 7.20E-03 | 9 | 0.70 | 3.90E-04 |
| 8.0 | 40 | 3.45 | 9.6 | 0.32 | 5.96E-02 | 0.00E+00 | 6.53E-03 | 9 | 1.18 | 9.49E-04 |
| 10.0 | 40 | 3.12 | 9.8 | 0.64 | 5.14E-02 | 0.00E+00 | 7.45E-03 | 8.7 | 0.85 | 6.89E-04 |
| 12.2 | 40 | 3.24 | 9.8 | 0.99 | 4.05E-02 | 0.00E+00 | 9.05E-03 | 8 | 0.49 | 6.02E-04 |
| 13.7 | -80 | 4.50 | 10.2 | 1.17 | 3.37E-02 | 0.00E+00 | 9.83E-03 | 7.6 | 0.23 | 5.82E-04 |
| 17.5 | 40 | 3.10 | 9.3 | 0.13 | 3.63E-02 | 0.00E+00 | 7.34E-03 | 7.6 | 1.47 | 2.41E-04 |
| 20.5 | 40 | 3.00 | 9.4 | 0.65 | 2.81E-02 | 0.00E+00 | 7.83E-03 | 7 | 0.88 | 1.30E-03 |

The water hydrolysis, which produces protons and hydroxide ions according the half reaction (7) and (6), explains the variation of the sodium hydroxide concentration shown on the following figure. The Faradic yields for the water hydrolysis is close to 100% during the reduction step and close to 90% during the regeneration step for the catholyte and the anolyte.

**[NaOH] variation vs time**

The efficiency of the nitrate reduction was not affected by multiplying regeneration cycles as is shown in the figure below. The figure represents the nitrate concentration variation against time. The cumulative faradic yield values are calculated for the three reduction cycles and are equal to 49,9%, 26,8% and 16,8%. These values decrease with the decreasing of the nitrate concentration as the reaction advances. The global faradic yield obtained is 33% for 80% nitrate destroying, which is value always obtained on the same conditions in different tests.

Increase in the nitrate concentration noticed during the both regeneration cycles is due to the water consumption and the volume depletion of the catholyte.

The concentration of ammonium ion in the catholyte and the anolyte increases with the time. However during the regeneration cycle, the current inversion causes the transfer of ammonium through the cation exchange membrane (CEM) from the catholyte to the anolyte. The transport number $t^{CEM}(NH_4^+)$ evaluated for the ammonium ions are close to 0,1-0,2 and for the sodium to 0,9-0,8. The affinity of the CEM for the ammonium or sodium depend on the rate of $[NH_4^+]/[Na^+]$ in the catholyte and on the species diffusion constant which is five time more important for the sodium ions that for ammonium ions.

For the simultaneous regeneration the contamination for

Ammoniac concentration vs time

ammonium ions does not exceed $2.10^{-3}$M.

This example demonstrates the feasibility of end regeneration or simultaneous regeneration. In this way one can reduce nitrate under ideal conditions with the possibility to regenerate the anolyte at the moment when it is needed. That would result in an increase of cell voltage and a better economy for the overall system. The contamination of the anolyte after its regeneration - as "concentrated" sodium hydroxide" can easily be re-utilised for collecting nitrate from the ion exchanger since it has no insignificant contamination.

EXAMPLE 3

In Example 2, the catholyte and the anolyte were regenerated simultaneously with the nitrate reduction step. In this example the possibility of regenerating the solutions after a complete nitrate reduction step is demonstrated. The regeneration was performed to neutralise and strip the catholyte and reconcentrate the anolyte by polarity reversal. Thus, in this way, after a cycle reduction-regeneration, a catholyte can e obtained with insignificant pollution which can be used as flushing solution or discharged as harmless waste. The reconcentrated anolyte solution can be used as anolyte or regeneration solution for the ion exchanger.

After the nitrate reduction operation, the current intensity was inverted in order to regenerate both solutions. The nitrate reduction was carried out at 40 A ($1kA/m^2$) and in the regeneration step the current density was 2 $kA/m^2$.

The results are summarised in the following table:

| TIME (hrs) | Current Intensity (mA) | Tension (volts) | CATHOLYTE | | | | | ANOLYTE | | |
|---|---|---|---|---|---|---|---|---|---|---|
| | | | Vol approx. Litres | $[OH^-]$ mol/L | $[NO_3^-]$ mol/L | $[NO_2^-]$ mol/L | $[NH_4^+]$ mol/L | Vol approx. litres | $[NH_4^-]$ mol/L | $[OH^-]$ mol/L |
| 0 | 40 | 3.1 | 10 | 0.4437 | 0.228 | 0.000 | 6.00E-04 | 10 | 0.00E+00 | 2.047 |
| 2.25 | 40 | 2.87 | 10.1 | 0.8404 | 0.201 | 0.000 | 6.70E-03 | 9.6 | 0.00E+00 | 1.7385 |
| 4.19 | 40 | 2.88 | 10.3 | 1.1216 | 0.142 | 0.007 | 9.70E-03 | 9.1 | 0.00E+00 | 1.5268 |
| 5.16 | 40 | 2.9 | 10.6 | 1.387 | 0.103 | 0.006 | 1.27E-02 | 8.7 | 0.00E+00 | 1.2556 |
| 3.33 | 40 | 3 | 10.8 | 1.6814 | 0.068 | 0.004 | 1.47E-02 | 8.3 | 0.00E+00 | 0.9624 |
| 10 | 40 | 3.1 | 11 | 1.819 | 0.038 | 0.004 | *1.98E-02* | 7.8 | 0.00E+00 | 0.6863 |
| 12.08 | 40 | 3.5 | 11.3 | 2.078 | 0.021 | 0.008 | 2.26E-02 | 7.4 | 0.00E+00 | 0.3537 |
| 14 | 40 | 3.6 | 11.5 | 2.2578 | 0.007 | 0.010 | 1.98E-02 | 7.1 | 0.00E+00 | 0.02 |
| | | | Vol approx. litres | $[OH^-]$ mol/L | $[NO_3^-]$ mol/L | $[NO_2^-]$ mol/L | $[NH_4^+]$ mol/L | Vol approx. litres | $[NH_4^+]$ mol/L | $[OH^-]$ mol/L |
| 14 | -80 | -3.7 | 11.5 | 2.2578 | 0.010 | 0.010 | 1.98E-02 | 7.1 | 0.00E+00 | 0.02 |
| 16.15 | -80 | -3.6 | 10.7 | 1.7868 | 0.008 | 0.007 | 1.35E-02 | 7.3 | 6.25E-04 | 0.9324 |
| 18.33 | -80 | -3.7 | 9.9 | 1.2985 | 0.005 | 0.003 | 1.26E-02 | 7.6 | 1.03E-03 | 1.5 |
| 20.15 | -80 | -3.5 | 9.2 | 0.893 | 0.001 | 0.007 | 1.19E-02 | 8 | 7.70E-04 | 2.068 |
| 22.57 | -80 | -4.35 | 8.3 | 0.2707 | 0.018 | 0.003 | 1.53E-02 | 8.5 | 1.30E-03 | 2.47 |
| 23.33 | -80 | -8 | 7.9 | 0.0378 | 0.017 | 0.009 | 8.90E-03 | 10.3 | 1.12E-03 | 2.616 |

At the end of this test, the catholyte can be used as flushing solution and a part of the anolyte (reconcentrated after regeneration) can be used for the regeneration of the ion exchanger.

After the regeneration of the electrolytes - a second complete cycle - further nitrate reduction and electrolyte regeneration was carried out. The catholyte was composed of the spent catholyte + 2.1L spent and regenerated anolyte + 160g $NaNO_3$. The anolyte was 8.2L of spent and regenerated anolyte + 1.8L water.

| TIME (hours) | Current Intensity (A) | Tension (volts) | CATHOLYTE | | | | | ANOLYTE | | |
|---|---|---|---|---|---|---|---|---|---|---|
| | | | Vol approx. litres | $[OH^-]$ mol/L | $[NO_3^-]$ mol/L | $[NO_2^-]$ mol/L | $[NH_4^+]$ mol/L | Vol approx. litres | $[NH_4^+]$ mol/L | $[OH^-]$ mol/L |
| 0 | 40 | 2.9 | 10 | 0.6286 | 0.253 | 0.003 | 3.12E-03 | 10 | 8.12E-04 | 1.94 |
| 2.65 | 40 | 2.78 | 10.3 | 1.0734 | 0.194 | 0.006 | 9.95E-03 | 9.4 | 3.39E-04 | 1.5774 |
| 5.25 | 40 | 2.79 | 10.5 | 1.4026 | 0.139 | 0.006 | 1.50E-02 | 8.9 | 4.80E-04 | 1.2873 |
| 9.5 | 40 | 3.05 | 11 | 1.9189 | 0.074 | 0.003 | 2.13E-02 | 8.1 | 2.34E-04 | 0.7176 |
| 12.5 | 40 | 3 | 11.3 | 2.1899 | 0.044 - | | 2.41E-02 | 7.5 | 2.66E-04 | 0.3575 |
| 13.66 | 40 | 5.4 | 11.5 | 2.2628 | 0.031 - | | 2.49E-02 | 7.3 | 6.50E-05 | 0.1581 |
| | | | vol approx. | $[OH^-]$ | $[NO_3^-]$ | $[NO_2^-]$ | $[NH_4^+]$ | Vol approx. | $[NH_4^+]$ | $[OH^-]$ |
| 13.66 | -80 | -4.98 | 11.5 | 2.2628 | 0.031 | 0.00 | 2.60E-02 | 7.3 | 0.00E+00 | 0.1586 |
| 17.66 | -80 | -5 | 10.0 | 1.5489 | 0.025 | 0.00 | 1.81E-02 | 7.5 | 0.00E+00 | 1.368 |
| 21.66 | -80 | -14 | 8.1 | 0.18 | 0.042 | 0.00 | 7.10E-03 | 8.5 | 0.00E+00 | 2.325 |

The water hydrolysis, which produces protons and hydroxide ions according to the half reaction (7) and (6), explains the variation of the sodium hydroxide concentration shown in the following figure. The faradic yields for the water hydrolysis is close to 100% during the reduction step and close to 80% during the regeneration step for the catholyte and the anolyte.

The global efficiency of the nitrate reduction for the first test was 40% for 78% of nitrate removal and 45% for 80% of nitrate removal for the second test. The concentration of ammonium ion in the catholyte was higher than when the regeneration was simultaneous with the reduction and the regeneration step allow 70% of the ammonium elimination, as is shown on the figure below:

## Claims

1. A process for the removal and destruction of dissolved nitrate from ground water or aqueous effluents containing the same, especially water and effluents containing at most 500 mg/L of nitrate, which comprises a removal step where nitrate is eliminated from said water or effluent in the form of a more concentrated solution thereof, and a destruction step where said more concentrated nitrate solution is subjected to an electrolysis operation for nitrate destruction by electrochemical reduction thereof, the electrolysis operation being performed in several cycles in a divided cell with anolyte and catholyte compartments, where said concentrated nitrate solution is initially used as a catholyte and spent catholyte is then used as an anolyte.

**2.** A process according to claim 1, wherein said cell is divided into anolyte and catholyte compartments by means of a cation exchange membrane.

**3.** A process according to any one of the preceding claims, wherein said removal step comprises an operation selected from ion-exchange, electrodialysis and reverse osmosis.

**4.** A process according to any one of claims 1-3, wherein said concentrated nitrate solution is used as a catholyte for a first cycle, spent catholyte from said first cycle is used as an anolyte for the next cycle and spent anolyte from said first cycle is used as a catholyte in said next cycle.

**5.** A process according to any one of the preceding claims, wherein said removal step comprises an ion-exchange operation and where after a first nitrate reduction cycle a major part of the spent catholyte is used as the anolyte in the next cycle, a minor part of the spent catholyte is recycled to the ion-exchange operation so as to remove nitrate from a prior removal step therefrom and spent anolyte is passed to the ion-exchange operation for use as a flushing solution for the ion-exchange nitrate removal step and then as the catholyte in the next cycle.

**6.** A process according to claim 4 or 5, wherein the change from catholyte in one cycle to anolyte in the next cycle and the change from anolyte in one cycle to catholyte in the next cycle, respectively, are accomplished by recycling thereof into the opposite compartment in said next cycles.

**7.** A process according to claim 4 or 5, wherein the change from catholyte in one cycle to anolyte in the next cycle and the change from anolyte in one cycle to catholyte in the next cycle, respectively, are accomplished by a reversal of the polarities of said compartments, respectively.

**8.** A process according to any one of claims 1-3, wherein said removal step comprises an ion-exchange operation and where a reversal of the polarities of said anolyte and catholyte compartments is performed during the nitrate reduction cycle.

**9.** A process according to claim 6, wherein an electrode selected from Pt, Ni, Cu, Pb, graphite, Hg, stainless steel, Hastelloy and Ti is used as a cathode and an electrode selected from Ni, Pt/Ti, Nb, Ti and Pt is used as an anode in the electrolysis operation.

**10.** A process according to claim 7 or 8, wherein an electrode selected from Pt, graphite, Ni, Hastelloy, stainless steel and Ti is used as a cathode and an electrode selected from Pt, Ni, graphite, stainless steel and Ti is used as an anode in the electrolysis operation.

**11.** An apparatus for the removal and destruction of dissolved nitrate from ground water or aqueous effluents containing the same, which comprises a nitrate removal unit and a nitrate destruction unit in the form of an electrochemical cell divided into anolyte and catholyte compartments by means of a cation exchange membrane, which units are arranged such that nitrate enriched solution from said removal unit will initially enter the catholyte compartment of said cell, the apparatus being provided with means enabling the use of spent catholyte as anolyte later on in the destruction operation.

**12.** An apparatus according to claim 11, wherein said nitrate removal unit is selected from ion-exchange, electrodialysis and reverse osmosis units.

**13.** An apparatus according to claim 12, wherein said ion-exchange unit comprises at least two separate ion-exchange columns or groups of ion exchange columns enabling the use of one column or group of columns for the removal of nitrate while the other one or the other group is regenerated, preferably by electrolyte from the electrochemical cell.

**Patentansprüche**

**1.** Verfahren für Entfernung und Abbau gelösten Nitrats aus dem Grundwasser oder aus Abwässern, die Nitrat enthalten, insbesondere aus Wasser und Abwässern, die höchstens 500 mg Nitrat je Liter enthalten, mit einem Entfernungsschritt, mit dem Nitrat aus dem Wasser oder Abwasser in Gestalt einer konzentrierteren Nitratlösung entfernt wird, sowie einem Abbauschritt, mit dem die konzentriertere Nitratlösung einem elektrolytischen Arbeitsgang zum Abbau des Nitrates durch dessen elektrochemische Reduktion unterworfen wird, wobei der elektrolytische Arbeitsgang in mehreren Zyklen in einer geteilten Zelle mit Anolyt- und Katholytkammern ausgeführt wird, wobei die konzentrierte Nitratlösung anfänglich als Katholyt und der verbrauchte Katholyt dann als Anolyt verwendet wird.

2. Verfahren nach Anspruch 1, **dadurch gekennzeichnet, dass** die Zelle durch eine Kationenaustauschermembran in Anolyt- und Katholytkammern unterteilt wird.

3. Verfahren nach einem der vorangehenden Ansprüche, **dadurch gekennzeichnet, dass** der Entfernungsschritt einen aus Ionenaustausch, Elektrodialyse und Umkehrosmose ausgewählten Arbeitsgang umfasst.

4. Verfahren nach einem der Ansprüche 1 bis 3, **dadurch gekennzeichnet, dass** die konzentrierte Nitratlösung in einem ersten Zyklus als Katholyt verwendet wird, verbrauchter Katholyt aus diesem ersten Zyklus als Anolyt für den nächsten Zyklus verwendet wird und verbrauchter Anolyt aus dem ersten Zyklus als Katholyt für diesen nächsten Zyklus verwendet wird.

5. Verfahren nach einem der vorangehenden Ansprüche, **dadurch gekennzeichnet, dass** der Entfernungsschritt einen Ionenaustausch-Arbeitsgang umfasst und wo nach einem ersten Nitratreduktionszyklus ein Hauptanteil des verbrauchten Katholyten als Anolyt im nächsten Zyklus verwendet wird, ein Nebenanteil des verbrauchten Katholyten zum Ionenaustausch-Arbeitsgang zurückgeführt wird, um Nitrat aus einem vorangehenden Entfernungsschritt daraus zu entfernen, und verbrauchter Anolyt zum Ionenaustausch-Arbeitsgang weitergeleitet wird, um als eine Ausschwemmlösung für den Ionenaustausch-Nitratentfernungsschritt und dann als Katholyt im nächsten Zyklus verwendet zu werden.

6. Verfahren nach Anspruch 4 oder 5, **dadurch gekennzeichnet, dass** der Wechsel vom Katholyten in einem Zyklus zum Anolyten im nächsten Zyklus sowie der Wechsel vom Anolyten in einem Zyklus zum Katholyten im nächsten Zyklus durch deren Rückführung in die entgegengesetzte Kammer in diesen nächsten Zyklen erreicht wird.

7. Verfahren nach Anspruch 4 oder 5, **dadurch gekennzeichnet, dass** der Wechsel vom Katholyten in einem Zyklus zum Anolyten im nächsten Zyklus sowie der Wechsel vom Anolyten in einem Zyklus zum Katholyten im nächsten Zyklus durch Umkehr der Polaritäten der Kammern erreicht wird.

8. Verfahren nach einem der Ansprüche 1 bis 3, **dadurch gekennzeichnet, dass** der Entfernungsschritt einen Ionenaustausch-Arbeitsgang umfasst und wo eine Umkehr der Polaritäten von Anolyt- und Katholytkammer während des Nitratreduktionszyklus ausgeführt wird.

9. Verfahren nach Anspruch 6, **dadurch gekennzeichnet, dass** eine aus Pt, Ni, Cu, Pb, Grafit, Hg, rostfreiem Stahl, Hastelloy und Ti ausgewählte Elektrode als Kathode und eine aus Ni, Pt/Ti, Nb, Ti und Pt ausgewählte Elektrode als Anode im Elektrolyse-Arbeitsgang verwendet wird.

10. Verfahren nach Anspruch 7 oder 8, **dadurch gekennzeichnet, dass** eine aus Pt, Grafit, Ni, Hastelloy, rostfreiem Stahl und Ti ausgewählte Elektrode als Kathode und eine aus Pt, Ni, Grafit, rostfreiem Stahl und Ti ausgewählte Elektrode als Anode im Elektrolyse-Arbeitsgang verwendet wird.

11. Vorrichtung für die Entfernung und Zerstörung gelösten Nitrats aus Grundwasser oder Abwässern, die Nitrat enthalten, eine Nitratentfernungseinheit und eine Nitratzerstörungseinheit in Gestalt einer elektrochemischen Zelle umfassend, die durch eine Kationenaustauschermembran in eine Anolyt- und eine Katholytkammer unterteilt ist, wobei die Einheiten so angeordnet sind, dass die angereicherte Nitratlösung aus der Entfernungseinheit anfänglich in die Katholytkammer dieser Zelle eintritt, während die Vorrichtung mit Mitteln versehen ist, die es ermöglichen, den verbrauchten Katholyten später im Zerstörungs-Arbeitsgang als Anolyten zu verwenden.

12. Vorrichtung nach Anspruch 11, **dadurch gekennzeichnet, dass** die Nitratenfernungseinheit aus einer Ionenaustauscher-, einer Elektrodialyse- und einer Umkehrosmoseeinheit ausgewählt ist.

13. Vorrichtung nach Anspruch 12, **dadurch gekennzeichnet, dass** die Ionenaustauschereinheit zumindest zwei getrennte Ionenaustauschsäulen oder -gruppen von Ionenaustauschsäulen umfasst, die es ermöglichen, dass die eine Säule oder Gruppe von Säulen für die Entfernung von Nitrat verwendet wird, während die andere Säule oder Gruppe von Säulen regeneriert wird, bevorzugt durch den Elektrolyten aus der elektrochemischen Zelle.

**Revendications**

1. Procédé de séparation et de destruction de nitrate dissous de la nappe phréatique ou des effluents aqueux contenant celui-ci, en particulier dans l'eau et les effluents contenant au plus 500 mg/l de nitrate, qui comprend une étape de séparation, où le nitrate est séparé de ladite eau ou dudit effluent sous la forme d'une solution plus concentrée de celui-ci, et une étape de destruction où ladite solution de nitrate plus concentrée est soumise à une opération d'électrolyse pour une destruction du nitrate par réduction électrochimique de celui-ci, l'opération d'électrolyse étant exécutée en plusieurs cycles dans une cellule divisée avec des compartiments d'anolyte et de catholyte, où ladite solution de nitrate concentrée est initialement utilisée comme catholyte, et le catholyte usé est ensuite utilisé comme anolyte.

2. Procédé selon la revendication 1, dans lequel ladite cellule est divisée en compartiments d'anolyte et de catholyte au moyen d'une membrane d'échange de cations.

3. Procédé selon l'une quelconque des revendications précédentes, dans lequel ladite étape de séparation comprend une opération sélectionnée parmi l'échange d'ions, l'électrodialyse et l'osmose inverse.

4. Procédé selon l'une quelconque des revendications 1 à 3, dans lequel ladite solution de nitrate concentrée est utilisée comme catholyte pour un premier cycle, le catholyte usé provenant dudit premier cycle est utilisé comme anolyte pour le cycle suivant, et l'anolyte usé provenant dudit premier cycle est utilisé comme catholyte dans ledit cycle suivant.

5. Procédé selon l'une quelconque des revendications précédentes, dans lequel ladite étape de séparation comprend une opération d'échange d'ions et où, après un premier cycle de réduction de nitrate, une majeure partie du catholyte usé est utilisée comme anolyte dans le cycle suivant, une partie mineure du catholyte usé est recyclée pour l'opération d'échange d'ions de manière à séparer le nitrate provenant d'une étape antérieure de séparation de celui-ci, et l'anolyte usé est transféré à l'opération d'échange d'ions en vue d'une utilisation comme solution de chasse pour l'étape de séparation de nitrate par échange d'ions, et ensuite, comme catholyte dans le cycle suivant.

6. Procédé selon la revendication 4 ou 5, dans lequel le changement du catholyte dans un cycle en anolyte dans le cycle suivant et le changement de l'anolyte dans un cycle en catholyte dans le cycle suivant, respectivement, sont accomplis par le recyclage de ceux-ci dans le compartiment opposé dans lesdits cycles suivants.

7. Procédé selon la revendication 4 ou 5, dans lequel le changement du catholyte dans un cycle en anolyte dans le cycle suivant et le changement de l'anolyte dans un cycle en catholyte dans le cycle suivant, respectivement, sont accomplis par une inversion des polarités desdits compartiments, respectivement.

8. Procédé selon l'une quelconque des revendications 1 à 3, dans lequel ladite étape de séparation comprend une opération d'échange d'ions, et où une inversion des polarités desdits compartiments d'anolyte et de catholyte est exécutée au cours du cycle de réduction de nitrate.

9. Procédé selon la revendication 6, dans lequel une électrode sélectionnée parmi Pt, Ni, Cu, Pb, le graphite, Hg, l'acier inoxydable, l'Hastelloy et Ti est utilisée comme cathode et une électrode sélectionnée parmi Ni, Pt/Ti, Nb, Ti et Pt est utilisée comme anode dans l'opération d'électrolyse.

10. Procédé selon la revendication 7 ou 8, dans lequel une électrode sélectionnée parmi Pt, le graphite, Ni, l'Hastelloy, l'acier inoxydable et Ti est utilisée comme cathode et une électrode sélectionnée parmi Pt, Ni, le graphite, l'acier inoxydable et Ti est utilisée comme anode dans l'opération d'électrolyse.

11. Dispositif pour la séparation et la destruction du nitrate dissous de la nappe phréatique ou des effluents aqueux contenant celui-ci, qui comprend une unité de séparation de nitrate et une unité de destruction de nitrate sous la forme d'une cellule électrochimique divisée en compartiments d'anolyte et de catholyte au moyen d'une membrane d'échange de cations, lesquelles unités sont agencées de sorte qu'une solution enrichie en nitrate, provenant de ladite unité de séparation, entrera initialement dans le compartiment de catholyte de ladite cellule, le dispositif étant muni d'un moyen permettant l'utilisation du catholyte usé comme anolyte ultérieurement dans l'opération de destruction.

12. Dispositif selon la revendication 11, dans lequel ladite unité de séparation de nitrate est sélectionnée parmi des

**EP 1 337 472 B1**

unités d'échange d'ions, d'électrodialyse et d'osmose inverse.

13. Dispositif selon la revendication 12, dans lequel ladite unité d'échange d'ions comprend au moins deux colonnes séparées d'échange d'ions ou groupes de colonnes d'échange d'ions permettant l'utilisation d'une première colonne ou d'un premier groupe de colonnes pour la séparation du nitrate alors que l'autre colonne ou l'autre groupe est régénéré, de préférence par un électrolyte provenant de la cellule électrochimique.